**Europäisches Patentamt**

**European Patent Office**

**Office européen des brevets**

(11) Veröffentlichungsnummer: **0 147 595**

**B1**

(12) **EUROPÄISCHE PATENTSCHRIFT**

(45) Veröffentlichungstag der Patentschrift:
**08.04.87**

(21) Anmeldenummer: **84113725.0**

(22) Anmeldetag: **14.11.84**

(51) Int. Cl.⁴: **G 01 M 17/02**

(54) **Prüfvorrichtung für Fahrzeugräder.**

(30) Priorität: **18.11.83 DE 3341721**

(43) Veröffentlichungstag der Anmeldung:
**10.07.85 Patentblatt 85/28**

(45) Bekanntmachung des Hinweises auf die Patenterteilung:
**08.04.87 Patentblatt 87/15**

(84) Benannte Vertragsstaaten:
**DE FR GB IT SE**

(56) Entgegenhaltungen:
**EP-A-0 063 245**
**DE-A-3 114 714**
**DE-A-3 138 573**

(73) Patentinhaber: **BAYERISCHE MOTOREN WERKE Aktiengesellschaft, Postfach 40 02 40, D-8000 München 40 (DE)**

(72) Erfinder: **Angerer, Siegfried, Freienrieder Weg 2, D-8904 Friedberg (DE)**

(74) Vertreter: **Bullwein, Fritz, Bayerische Motoren Werke Aktiengesellschaft Postfach 40 02 40 Petuelring 130 AJ- 33, D-8000 München 40 (DE)**

LIBER, STOCKHOLM 1987

## Beschreibung

Die Erfindung bezieht sich auf eine Prüfvorrichtung für Fahrzeugräder, mit einer Trommel, die das Rad in sich aufnimmt, und mit einem Radträger, der das Rad zentral frei drehbar hält und unter der Wirkung zweier senkrecht zueinander wirkender Krafterzeuger für eine Vertikal- und eine Seitenlast mit dem Reifen gegen die Trommel preßt, wobei der eine Krafterzeuger parallel und der andere Krafterzeuger senkrecht zur Radachse wirkt.

Bei einer derartigen Prüfvorrichtung, wie sie aus der EP-A-63 245 und entsprechend DE-OS 31 14 714 und 31 38 573 bekannt ist, besitzt die Trommel einen Innendurchmesser, der gleich oder geringfügig größer als der Außendurchmesser des aufgezogenen Reifens ist. Eine derartige Vorrichtung erfordert zum Prüfen von Reifen unterschiedlicher Außendurchmesser jeweils unterschiedliche Trommeln, so daß sie sogar für Reifen ein und desselben Baumusters nicht universell verwendbar ist. Weichen die Reifendurchmesser, wie allgemein üblich, bei unterschiedlichen Baumustern noch voneinander ab, so bedeutet dies sowohl hinsichtlich der Gestehungskosten der Prüfvorrichtung, als auch der Umrüstzeiten für das Prüfen unterschiedlicher Räder, erhebliche Nachteile. Weit gravierender ist darüber hinaus jedoch der Umstand, daß mit der bekannten Prüfvorrichtung eine praxisnahe Prüfung der Räder nicht möglich ist, da die Räder mit Reaktionskräften auf die durch die Krafterzeuger ausgeübten Kräfte beaufschlagt werden, die nahezu oder vollständig über den gesamten Umfang des Reifens auf das Rad wirken. Demgegenüber erfolgt die Belastung der Räder in der Praxis nur über einen Bruchteil des Reifenumfangs, der durch die Größe der Reifenaufstandsfläche im Verhältnis zur gesamten Umfangsfläche des Reifens festgelegt ist.

Schließlich ist eine praxisgerechte Prüfung der Fahrzeugräder mit voneinander unabhängiger Vertikal- und Seitenlast nicht möglich, da die Seitenkräfte als Reaktionskräfte über zwei schräge Anlaufringe in das Rad eingeleitet werden. Eine derartig wirksame Seitenkraft hat jedoch eine Kraftkomponente in vertikaler Richtung zur Folge, so daß Vertikal- und Seitenlast nicht voneinander unabhängig sind. Es ist damit lediglich eine Prüfung der Räder mit einem Verhältnis von Seiten- zur Vertikallast möglich, das erheblich unter den in der Praxis auftretenden maximalen Verhältnis von 1 liegt.

Der Erfindung liegt die Aufgabe zugrunde, eine Prüfvorrichtung der eingangs genannten Art zu schaffen, die über einen weiten Bereich von Reifendurchmessern einsetzbar ist und die eine praxisgerechte Prüfung der Fahrzeugräder ermöglicht.

Die Lösung dieser Aufgabe besteht darin, daß die Trommel in ihrem Durchmesser deutlich größer als der Durchmesser des Reifens ist und der eine Krafterzeuger über den anderen Krafterzeuger auf das Fahrzeugrad wirkt.

Durch den Größenunterschied von Trommel und Reifen wird eine universelle Verwendung der Prüfvorrichtung ermöglicht. Zugleich wird die Reifenaufstandsfläche gegenüber der bekannten Prüfvorrichtung auf ein Maß reduziert, das der Praxis entspricht. Schließlich wird durch die Verkopplung der beiden Krafterzeuger erreicht, daß die von ihnen ausgeübten Kräfte stets senkrecht zueinander und in der Richtung verlaufen, in der sie definiert sind. Diese Ausrichtung der Kräfte kann dabei weiter durch Linearführungen verbessert werden, die jedem Krafterzeuger zugeordnet sind und parallel zu der Richtung der erzeugten Kräfte verlaufen.

Eine konstruktiv vorteilhafte Ausgestaltung der Prüfvorrichtung ist mit Hilfe eines Schwenkkopfes erreicht, der das Rad in der Trommel hält und dessen Schwenkachse senkrecht zur Radachse und parallel zur Radaufstandsfläche verläuft. Mit Hilfe des Schwenkkopfes kann das Rad von der Innenfläche der Trommel abgehoben werden und beispielsweise mit Hilfe der Krafterzeuger und der ggf. vorhandenen Linearführungen aus der Trommel gebracht werden. Dabei kann bei entsprechender Ausführung das Rad außerhalb der Trommel beispielsweise auch um 90° geschwenkt und damit in einen Bereich gebracht werden, in dem es für eine Montage bzw. Demontage frei zugänglich ist. Das Einbringen des Rades in die Prüfstellung in der Trommel vollzieht sich dann wieder auf umgekehrtem Wege.

Zwei weitere konstruktive Maßnahmen dienen dazu, die Prüfvorrichtung besonders kompakt aufzubauen. Die eine Maßnahme besteht darin, den Schwenkkopf zwischen dem Rad und den Krafterzeugern anzuordnen. Verläuft als zweite Maßnahme die Radaufstandsfläche senkrecht, d.h. verläuft ihre Normale waagrecht, so ergibt sich damit ein Prüfstand, dessen wesentliche Elemente in einer Ebene, beispielsweise auf dem Boden und in einem Raum angeordnet werden können, bei dem sie trotz gedrängter Abmessungen frei zugänglich sind.

Zusätzlich zu diesen Vorteilen des Schwenkkopfes hinsichtlich des Austausches der Räder und des erforderlichen Bauvolumens lassen sich durch konstruktive Maßnahmen auch bedeutende funktionelle Vorteile erzielen. Ist nämlich der Schwenkkopf in seinem Schwenkwinkel auch unmittelbar vor bzw. während des Prüfvorgangs veränderlich, so kann das Rad auch mit einem von Null verschiedenen Sturzwinkel geprüft werden. Der Sturzwinkel kann darüber hinaus variabel einstellbar sein. Ein von Null verschiedener Sturzwinkel führt dazu, daß die durch die beiden Krafterzeuger ausgeübten Kräfte auch jeweils eine definierte Komponente in der Richtung des jeweils anderen Krafterzeugers besitzen. Dadurch kann bei entsprechender Einstellung des Sturzwinkels das Rad auch mit einem Verhältnis von Seiten- zur Vertikallast geprüft werden, das bis in die Größenordnung von 1 reicht und damit den tatsächlichen Belastungsverhältnissen des Fahrzeugrades entspricht.

Erreicht können diese Sturzwinkel auf konstruktiv unterschiedliche Weise werden. Eine Möglichkeit besteht darin, den Schwenkkopf elastisch abzustützen. Dies kann mit Hilfe einer Feder erfolgen, die über einen Hebelarm ein Drehmoment auf den Schwenkkopf ausübt. Der Sturzwinkel ergibt sich dann aus dem Sturzwinkel des nicht belasteten Rades und der Gleichgewichtslage infolge des durch die Krafterzeuger gegebenen Drehmoments und des durch diese Feder ausgeübten Drehmoments. Das Drehmoment der Krafterzeuger wirkt dabei über einen Hebelarm auf den Schwenkkopf, der durch den Abstand des Rad-Mittelpunkts und der Schwenkachse bestimmt ist. Dabei kann durch entsprechende Wahl von Federrate dieser zusätzlichen Feder und der beiden Hebelarme ein Sturzwinkel des Rades erreicht werden, der während eines Prüfvorganges unabhängig von den tatsächlich auf das Rad ausgeübten Kräften konstant oder in definierter Weise veränderlich ist.

Alternativ zu einer zusätzlichen Feder kann der Sturzwinkel des Rades auch mit Hilfe eines auf den Schwenkkopf wirkenden Drehmoments eingestellt werden, das durch einen variablen Krafterzeuger über einen Hebel auf den Schwenkkopf hervorgerufen wird. Damit ist eine beliebige Einstellung des Sturzwinkels unabhängig von den durch die beiden Krafterzeuger für Vertikal- und Seitenlast ausgeübten Kräften erreicht.

In der Zeichnung sind Ausführungsbeispiele der Erfindung dargestellt. Es zeigt

Fig. 1 eine Prüfvorrichtung für Fahrzeugräder mit vorgegebener Einstellung des Sturzwinkels und

Fig. 2 eine Alternative zu Fig. 1 mit beliebig wählbarer Einstellung des Sturzwinkels.

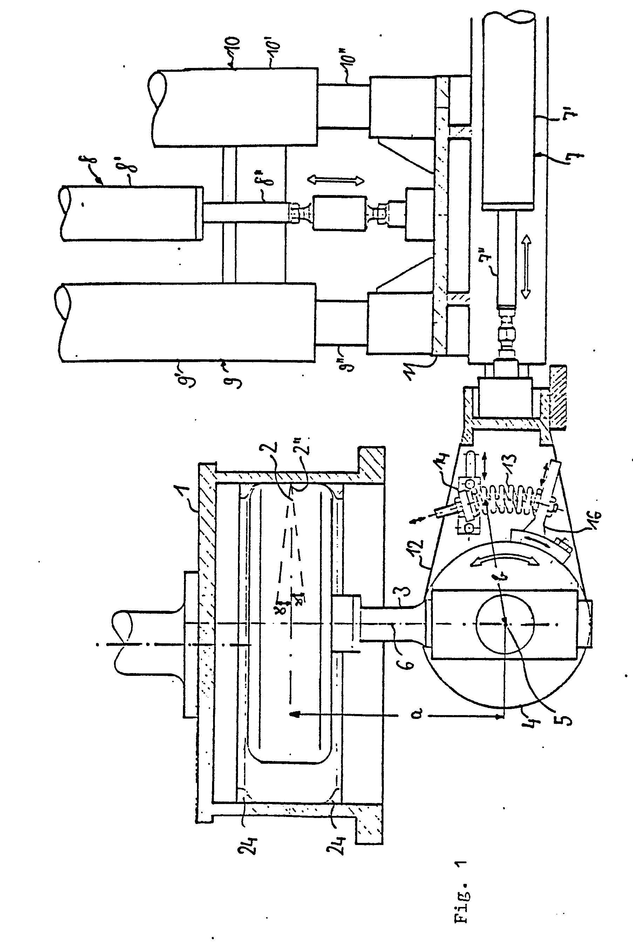

Die Prüfvorrichtung von Fig. 1 für Fahrzeugräder enthält als wesentliche Elemente eine Trommel 1, die extern angetrieben ist und das zu untersuchende Fahrzeugrad 2 in sich aufnimmt. Der Innendurchmesser der Trommel 1 ist beispielsweise um etwa 20 % größer als der Außendurchmesser des Reifens 2'' des Fahrzeugrades 2. Dieses ist über einen Schwenkarm 3 in einem Schwenkkopf 4 gehalten, dessen Schwenkachse 5 senkrecht zur Radachse 6 verläuft. Das Fahrzeugrad liegt an der Trommel 1 über eine Radaufstandsfläche an, die senkrecht zur Zeichenebene steht.

Als weitere wesentliche Elemente enthält die Prüfvorrichtung einen Krafterzeuger 7 für die Vertikalbelastung des Fahrzeugrades 2 und einen Krafterzeuger 8 für die Seitenlast. Dem Krafterzeuger 8 sind Linearführungen 9 und 10 zugeordnet, die zu dessen beiden Seiten liegen. Die Krafterzeuger 7 und 8 und die Linearführungen 9 und 10 bestehen jeweils aus feststehenden Zylindern 7' bis 10', gegenüber denen Kolbenstangen 7'' bis 10'' verschiebbar sind. Die Kolbenstange 8'' ist dabei mit ihrem freien Ende an einem Gestell 11 befestigt, das den Krafterzeuger 7 trägt. Dessen Kolbenstange 7'' wiederum wirkt auf einen Träger 12 für den Schwenkkopf 4.

Der Schwenkkopf 4 ist elastisch am Träger 12 gelagert. Hierzu dient eine Druckfeder 13, deren eines Ende in einem Festlager 14 gehalten ist und dessen anderes Ende über einen Hebelarm 16 am Schwenkkopf 4 angreift. Die Druckfeder 13 übt damit ein Drehmoment auf den Schwenkkopf 4 aus, dessen Bestimmungsgrößen die Auslenkung und Federrate der Feder 13 und ein Hebelarm ist, der durch den Abstand b der Feder 13 von der Schwenkachse 5 bestimmt ist. Die Auslenkung der Feder 13 wiederum ist durch Verstellen des Festlagers 14 mit Hilfe einer nicht dargestellten Spannvorrichtung voreinstellbar.

Zum Prüfen des Fahrzeugrades 2 wird dieses zunächst über die Trommel 1 in Rotation versetzt. Die Rotationsgeschwindigkeit des Rads ist in dem Maß größer, in dem sich sein Durchmesser von dem Innendurchmesser der Trommel 1 unterscheidet, d.h. im vorliegenden Fall um 10 bis 20 %. Damit ergibt sich eine Relativgeschwindigkeit zwischen Trommel und Fahrzeugrad, die ebenfalls nur einen Bruchteil der Rotationsgeschwindigkeit von Trommel 1 bzw. Fahrzeugrad 2 darstellt. Der Verschleiß des Fahrzeugrades ist damit während der Prüfung gering.

Während des Prüfvorgangs wird das Fahrzeugrad 2 mit wechselnden oder konstanten Belastungen beaufschlagt. Der Krafterzeuger 7 übt über den Träger 12, den Schwenkkopf 4 und den Schwenkarm 3 eine Vertikallast und der Krafterzeuger 8 über das Gestell 11, den Träger 12, den Schwenkkopf 4 und den Schwenkarm 6 eine Seitenlast auf das Fahrzeugrad 2 aus. Bedingt durch den senkrechten Angriff des Krafterzeugers 8 am Gestell 11 ist gewährleistet, daß Vertikal- und Seitenlast in der Radaufstandsfläche exakt senkrecht zueinander sind.

Das Verhältnis von tatsächlich wirksamer Seiten- und Vertikallast kann durch Einstellen eines von Null verschiedenen Sturzwinkels bis zu einem Wert variierbar sein, der dem in der Praxis tatsächlich auftretenden Wert von etwa 1 entspricht. Hierzu wird die Druckfeder 13 hinsichtlich ihrer Federrate und/oder Vorspannung so eingestellt, daß sie auf das Fahrzeugrad 2 ein zusätzliches Drehmoment ausübt. Dieses steht im Gleichgewicht mit dem Drehmoment, das durch den Krafterzeuger 7 über den Schwenkkopf 4 und den Schwenkarm 3 auf des Fahrzeugrad ausgeübt wird. Damit ergibt sich ein Sturzwinkel $\alpha$, der abhängig von der Vertikallast oder davon unabhängig einen definierten festen oder variablen Wert besitzt.

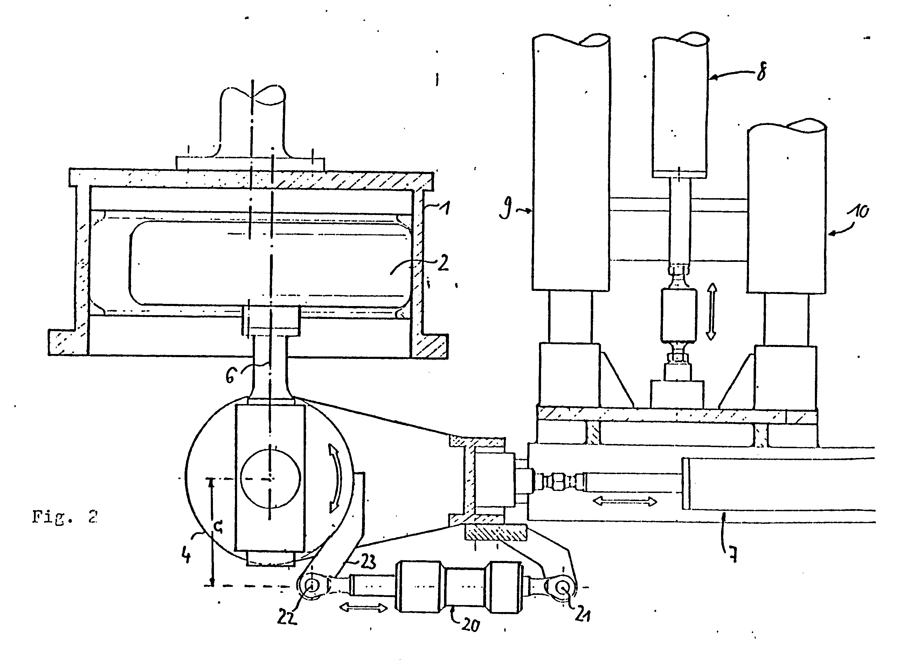

Die Ausführungsform nach Fig. 2 unterschiedet sich gegenüber der von Fig. 1 lediglich darin, daß an Stelle der elastischen Einstellung des Schwenkkopfes 4 mit Hilfe der Druckfeder 13 eine variable Schwenkwinkel-Einstellung vorgenommen wird. Hierzu dient ein zusätzlicher Krafterzeuger 20, der an einem Ende 21 am Träger 12 befestigt ist und mit seinem lageveränderlichen anderen Ende 22 über einen Hebel 23 am Schwenkkopf 4 angreift. Dadurch kann der Schwenkwinkel des Schwenkkopfes 4 unabhängig von der durch die Krafterzeuger 7 und 8 auf das Fahrzeugrad 2 ausgeübten Kraft auf einen vorgegebenen Wert eingestellt und damit das Fahrzeugrad ebenfalls mit Vertikal- und Seitenlasten beaufschlagt werden, die den in der Praxis auftretenden Umfang besitzen.

In beiden Ausführungsformen sind zusätzlich Anlaufringe 24 vorgesehen, die am Fahrzeugrad stets anliegen und dieses bei Einwirken einer Seitenkraft gerade führen. Sie bilden eine Zwangsführung und dienen dazu, die durch den Sturz hervorgerufene Kurvenbewegung des Fahrzeugrades zu kompensieren. Damit lassen sich die Seitenkräfte ohne zusätzlich auftretenden Spurwinkeln aufbringen.

**Patentansprüche**

1. Prüfvorrichtung für Fahrzeugräder (2), mit einer Trommel (1), die das Rad (2) in sich aufnimmt und mit einem Radträger, der das Rad (2) zentral frei drehbar hält und unter der Wirkung zweier senkrecht zueinander wirkender Krafterzeuger (7, 8) für eine Vertikal- und eine Seitenlast mit dem Reifen gegen die Trommel (1) preßt, wobei der eine Krafterzeuger (8) parallel und der andere Krafterzeuger (7) senkrecht zur Radachse (6) wirkt, dadurch gekennzeichnet, daß die Trommel (1) in ihrem Durchmesser deutlich größer als der Durchmesser des Reifens ist und der eine Krafterzeuger (8) über den anderen Krafterzeuger (7) auf das Fahrzeugrad (2) wirkt.

2. Prüfvorrichtung nach Anspruch 1, dadurch gekennzeichnet, daß mindestens einem der Krafterzeuger (8) eine Linearführung (9, 10) zugeordnet ist.

3. Prüfvorrichtung nach Anspruch 1 oder 2, dadurch gekennzeichnet, daß die Radaufstandsfläche senkrecht steht.

4. Prüfvorrichtung nach einem der Ansprüche 1 bis 3, dadurch gekennzeichnet, daß das Fahrzeugrad (2) in einem Schwenkkopf (4) gehalten ist, dessen Schwenkachse (5) senkrecht zur Radachse (6) und parallel zur Radaufstandsfläche verläuft.

5. Prüfvorrichtung nach Ansprucn 4, dadurch gekennzeichnet, daß die Krafterzeuger (7, 8) - in Kraftflußrichtung gesehen - vor dem Schwenkkopf (4) liegen.

6. Prüfvorrichtung nach Anspruch 4 oder 5, dadurch gekennzeichnet, daß der Sturzwinkel (α) des Fahrzeugrades (2) in der Trommel (1) einstellbar ist.

7. Prüfvorrichtung nach Anspruch 6, dadurch gekennzeichnet, daß der Sturzwinkel durch elastische Einstellung des Schwenkkopfes (4) einstellbar ist.

8. Prüfvorrichtung nach Anspruch 7, dadunch gekennzeichnet, daß der Schwenkkopf (4) über einen Hebelarm (b) mit einer Federkraft (Druckfeder 13) beaufschlagt ist.

9. Prüfvorrichtung nach Anspruch 6, dadurch gekennzeichnet, daß der Schwenkkopf (4) mit seinem Schwenkwinkel durch einen Krafterzeuger (20) variabel einstellbar ist, der über einen Hebelarm (c) auf den Schwenkkopf (4) wirkt.

10. Prüfvorrichtungen nach einen der Ansprüche 6 - 9, dadurch gekennzeichnet, daß das Fahrzeugrad (2) durch zwei stets anliegende seitliche Anlaufringe (24) in der Trommel (1) geführt ist.

**Claims**

1. Testing apparatus for vehicle wheels (2), comprising a drum (1) which accommodates the wheel (2) within it and a wheel carrier which holds the wheel (2) centrally for free rotation and, under the action of two power generators (7, 8) acting perpendicularly of one another for a vertical load and a lateral load, presses the wheel (2) with the tyre against the drum (1), with one power generator (8) acting parallel to and the other power generator (7) acting perpendicularly to the wheel axis (6), characterised in that the drum (1) is substantially larger in diameter than the diameter of the tyre, and the one power generator (8) acts through the other power generator (7) upon the vehicle wheel (2).

2. Testing apparatus according to Claim 1, characterised in that a linear guide (8, 10) is provided for at least one of the power generators (8).

3. Testing apparatus according to Claim 1 or 2, characterised in that the stand surface of the wheel extends vertically.

4. Testing apparatus according to one of Claims 1 to 3, characterised in that the vehicle wheel (2) is held in a pivot head (4) the pivot axis (5) of which extends perpendicularly of the wheel axis (6) and parallel to the stand surface of the wheel.

5. Testing apparatus according to Claim 4, characterised in that the power generators (7, 8) - seen in the direction of power application - lie before the pivot head (4).

6. Testing apparatus according to Claim 4 or 5, characterised in that the camber angle (α) of the vehicle wheel (2) in the drum (1) is adjustable.

7. Testing apparatus according to Claim 6, characterised in that the camber angle is adjustable by resilient adjustment of the pivot head (4).

8. Testing apparatus according to Claim 7, characterised in that the pivot head (4) is subjected to the action of a spring force (compression spring 13) through a lever arm (b).

8. Testing apparatus according to Claim 6, characterised in that the pivot head (4) with its pivot angle is variably adjustable by a power generator (20) which acts on the pivot head (4) through a pivot arm (c).

10. Testing apparatuses according to any one of Claims 6 - 8, characterised in that the vehicle wheel (2) is guided in the drum (1) by two constantly applied lateral abutment rings (24).

## Revendications

1°) Appareil d'essai pour roues de véhicule (2), comportant un tambour (1) qui reçoit la roue (2) et maintient de manière centrale, libre en rotation la roue (2) par l'intermédiaire du support de roue, et presse le pneumatique contre le tambour (1) sous l'effet de deux générateurs de force (7, 8) perpendiculaires l'un à l'autre pour engendrer une force verticale et une force latérale, l'un des générateurs de force (8) agissant parallèlement à l'axe (6) de la roue et l'autre générateur de force (7) agissant perpendiculairement à l'axe (6) de la roue, caractérisé en ce que le tambour (1) a un diamètre nettement supérieur au diamètre du pneumatique et l'un des générateurs de force (8) agit sur la roue (2) du véhicule par l'intermédiaire de l'autre générateur de force (7).

2°) Appareil d'essai selon la revendication 1, caractérisé en ce qu'au moins l'un des générateurs de force (8) comporte un guidage linéaire (9, 10).

3°) Appareil d'essai selon les revendications 1 ou 2, caractérisé en ce que la surface d'appui de la roue est perpendiculaire.

4°) Appareil d'essai selon l'une des revendications 1 à 3, caractérisé en ce que la roue de véhicule (2) est maintenue dans une tête pivotante (4) dont l'axe de pivotement (5) est perpendiculaire à l'axe (6) de la roue et parallèle à la surface d'appui de la roue.

5°) Appareil d'essai selon la revendication 4, caractérisé en ce que les générateurs de force (7, 8) sont situés avant la tête pivotante (4) dans la direction du passage des efforts.

6°) Appareil d'essai selon les revendications 4 et 5, caractérisé en ce que l'angle de carrossage (α) de la roue du véhicule (2) à l'intérieur du tambour est réglable.

7°) Appareil d'essai selon la revendication 6, caractérisé en ce que l'angle de carrossage est réglable par un réglage élastique de la tête pivotante (4).

8°) Appareil d'essai selon la revendication 7, caractérisé en ce que la tête pivotante (4) est sollicitée par une force de ressort (ressort de compression 13) par l'intermédiaire d'un bras de levier (b).

9°) Appareil d'essai selon la revendication 6, caractérisé en ce que l'angle de pivotement de la tête pivotante (4) est réglable de maniere variable par un générateur de force (20) qui agit sur la tête pivotante (4) par l'intermédiaire d'un bras de levier (c).

10°) Appareil d'essai selon l'une des revendications 6 à 9, caractérisé en ce que la roue de véhicule (2) est guidée dans le tambour (1) par deux bagues d'appui (24) s'appuyant toujours latéralement.

Fig. 1

Fig. 2

0 147 595